# EUROPEAN PATENT SPECIFICATION

(11) **EP 3 166 085 B1**
(45) Date of publication and mention of the grant of the patent: **01.08.2018**
(21) Application number: 16195147.0
(22) Date of filing: 21.10.2016
(51) Int. Cl.: G06T 19/20, G06T 15/50, G06T 19/00

(54) **DETERMINING THE LIGHTING EFFECT FOR A VIRTUALLY PLACED LUMINAIRE**
BESTIMMUNG DES BELEUCHTUNGSEFFEKTS FÜR EINE VIRTUELL PLATZIERTE LEUCHTE
DÉTERMINATION DE L'EFFET D'ÉCLAIRAGE POUR UN LUMINAIRE VIRTUELLEMENT PLACÉ

(30) Priority: 27.10.2015 EP 15191650
(43) Date of publication of application: 10.05.2017
(73) Proprietor: Philips Lighting Holding B.V., 5656 AE Eindhoven (NL)
(72) Inventor: Lee Wei, Pien, 5656 AE Eindhoven (NL)
(74) Representative: van Eeuwijk, Alexander Henricus Waltherus

(56) References cited:
- US-A1- 2008 071 559
- Céline Loscos ET AL: "Interactive Virtual Relighting and Remodeling of Real Scenes" In: "EUROGRAPHICS", 1999, SPRINGER VERLAG, VIENNA, AT, XP055231824, ISSN: 0946-2767 pages 329-340, DOI: 10.1007/978-3-7091-6809-7_29, * the whole document *
- Pierre Poulin ET AL: "Interactively Modeling with Photogrammetry" In: "Rendering Techniques '98", 1998, Springer Vienna, Vienna, XP055190179, ISSN: 0946-2767 ISBN: 978-3-70-916453-2 pages 93-104, DOI: 10.1007/978-3-7091-6453-2_9, * the whole document *
- WILCZKOWIAK M ET AL: "Camera calibration and 3D reconstruction from single images using parallelepipeds", PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 1, 7 July 2001 (2001-07-07), pages 142-148, XP010553974, ISBN: 978-0-7695-1143-6
- Erick Delage ET AL: "Automatic Single-Image 3d Reconstructions of Indoor Manhattan World Scenes" In: "Robotics Research", 2007, Springer Berlin Heidelberg, Berlin, Heidelberg, XP055268172, ISBN: 978-3-540-48110-2 vol. 28, pages 305-321, DOI: 10.1007/978-3-540-48113-3_28, * the whole document *
- SHARIFUL SHIKDER: "Evaluation of four artificial lighting simulation tools with virtual building reference", 20090713; 20090713 - 20090716, 13 July 2009 (2009-07-13), pages 430-437, XP058009416,
- GUILLOU E AND MENEVEAUX D ET AL: "Using vanishing points for camera calibration and coarse 3D reconstruction from a single image", VISUAL COMPUTER, SPRINGER, BERLIN, DE, vol. 16, no. 7, 2000, pages 396-410, XP002991719, ISSN: 0178-2789

## Description

### FIELD OF THE INVENTION

The present invention generally relates to a computer implemented method for determining an effect of a luminaire when a luminaire would be placed in a space. Further, the present invention relates to a computer program product that enables a processor to carry out the computer implemented method and to a computer readable storage medium, for storing the computer readable computer program product.

### BACKGROUND

Many techniques to extract three dimensional (3D) information from a two dimensional (2D) image exist. In general, these techniques are computationally intensive. Especially, detecting surfaces of objects, such as table surfaces, shelve surfaces and counter surfaces in 3D images provides a significant computational challenge. Moreover, detecting objects on surfaces such as pillows on couches or lamps on shelves, provides an even bigger computational challenge.

A method to extract 3D information from a 2D image is described in the paper "Globally Optimal Line Clustering and Vanishing Point Estimation in Manhattan world" by Bazin et. Al. In this paper the scene in the 2D image is a Manhattan world indicating that parallel lines in an image intersect at a single point called the vanishing point (VP).

### SUMMARY OF THE INVENTION

Consider a 2D image portraying a 3D scene. The inventors realized that it is useful to see the effect of the placement of a luminaire in the 3D scene. Therefore, it is an object of the invention to provide a computer implemented method and a computer program product for determining a lighting effect of a luminaire when the luminaire would be placed in a space, on the basis of a two dimensional (2D) image of the space.

According to a first aspect of the invention the object is achieved by a computer implemented method of determining a lighting effect of a luminaire when the luminaire would be placed in a space, on the basis of a two dimensional (2D) image of the space, the computer implemented method comprising:
- determine three dimensional (3D) perspective parameters based on the 2D image, wherein the 3D perspective parameters are indicative of a 3D perspective of the space as imaged in the 2D image;
- receiving object information comprising information on a shape of a surface of at least one object placed in the space ;
- defining a representation of the shape which matches the 3D perspective of the space based on the 3D perspective parameters;
- detecting the representation of the shape in the 2D image;
- deriving , from the detected representation of the shape and from the 3D perspective, surface position information indicative of the position of the surface of the object in the space;
- receiving information on a position of the luminaire in the space;
- defining a representation of the luminaire that matches the 3D perspective at the received position, based on the 3D perspective parameters and the luminaire position and on the 2D image; and
- determining the lighting effect based on the 3D perspective parameters, the surface position information, the luminaire position and on the 2D image.

The computer implemented method will be carried out on one or more processors. As the goal of the invention is determine the lighting effect of a luminaire that is digitally placed in a space based on a 2D image, it is advantageous to know the 3D perspective of the space that is captured by the image. Firstly, this is advantageous as the luminaire can then be placed, digitally, at a physically possible position. Secondly, the digital representation of the luminaire should match the 3D perspective of the space in order to, in the case of a rendering, look natural. Thirdly, it is propitious to have information on the 3D perspective as the lighting effect generated by the luminaire has to match said 3D perspective as well.

In order to transform the luminaire to the 3D perspective of the 2D image and to determine the lighting effect, 3D perspective parameters can be used. These parameters are used to transform the original image and can be defined in the shape of a transformation matrix. However, other representations can be used as well. For example, the 3D perspective parameters can indicate vanishing points within the 2D image. These vanishing points can subsequently be used to determine a transformation matrix.

As the detection of surfaces in 2D images is a computationally intensive procedure, it is advantageous to provide a processor with additional information such as the shape of a surface corresponding to the object that is placed in the space. By making use of the shape of the surface and the 3D perspective parameters, representations of this shape can be created that match the 3D perspective. These representations can then be detected in the image hereby detecting the surfaces of the object. The number of possible representations can be decreased by making additional assumptions. For example, when a table needs to be detected it can be assumed that the detectable surface is parallel to the floor surface.

To determine the effect of a luminaire, it is advantageous that the position of the luminaire is indicated. This can be done via user interface. For example, the 2D image can be displayed on a display and a user can indicate the position of the luminaire via a user interface. The user can for example indicate the position by using a computer mouse, a keyboard, a touchscreen or any other input device.

Based on the position of the luminaire and the 3D perspective parameters a representation of the luminaire for that position can be determined. This means that the luminaire can be rendered in the image in a natural way. The fact that one or multiple surfaces are detected is advantageous as the luminaire can now be placed on a surface. This is advantageous as a desk lamp can be rendered on desk surface. This can be useful for a user that wants to acquire a lamp and wants to know how it looks.

Moreover, the surfaces are also useful for the determination of the lighting effect. When a luminaire is placed above a surface shadows will be created below that surface will and a bright spot will be created on top of the surface.

All in all, the invention is advantageous as a person who wants to acquire a luminaire can provide a 2D image of the space in which he/she wants to place the luminaire. Based on this image, the detected 3D perspective parameters, the shape of the surface that needs to be detected, and the indicated position of the luminaire, a representation of the luminaire can be defined an the lighting effect of the luminaire can be determined. The representation of the luminaire and the lighting effect can both be rendered such that the person who wants to buy the luminaire can see how the luminaire looks in the space where he/she wants to place the luminaire.

In an embodiment of the computer implemented method, the surface position information is derived for a plurality of objects placed in the space.

It is advantageous to detect a plurality of surfaces in the 2D image as this enables the computer on which the computer implemented method is carried out to determine the lighting effect better and enables the user to place the luminaire on more surfaces.

In an embodiment of the computer implemented method, wherein the 3D perspective parameters comprise three vanishing points that represent three orthogonal perspective planes in the 3D perspective of the space as imaged in the 2D image, the computer implemented method further comprises:
- finding the three vanishing points using sets of lines extracted from the 2D image.
Using three vanishing points that represent three orthogonal perspective planes is advantageous as this facilitates the detection of the surfaces in the image. Orthogonal perspective planes are orthogonal planes in a 3D space. These orthogonal planes can be built up out of the vanishing points. Many possible perspective planes can be created. It is advantageous to use sets of lines extracted from the 2D image to detect the vanishing points as these lines will meet, when the lines are not parallel, in a vanishing point. It is possible, depending on the position at which the image is taken, that one or two vanishing point will placed at infinity. In that case, there will be one or two sets of parallel lines in the image. Note that throughout this application vanishing points can be placed at infinity. This will correspond with a set of parallel lines in the image.

In an embodiment of the computer implemented method, wherein the 3D perspective parameters comprise three vanishing points that represent three orthogonal perspective planes in the 3D perspective of the space as imaged in the 2D image, the computer implemented method further comprises:
- receiving perspective information indicative of the orthogonal perspective planes; and
- finding the three vanishing points based on the received perspective information.

It is advantages that the user indicates the orthogonal perspective planes such that the computational power necessary find the three vanishing points is lower. The user can indicate the orthogonal perspective planes for example by indicating the walls in a room, by indicating a driveway in a garden or by indicating walls of a garden shed. In a user interface the user can indicate the wall/floor/ceiling using filled polygons (colored lines in colored areas) and draggable "junctions" of the polygons.

In an embodiment of the computer implemented method, the computer implemented method further comprises:
- receiving surface orientation information indicative of the perspective plane in the 3D perspective to which the surface of the detectable shape is parallel; and
- detecting the representation of the shape in the 2D image based on the surface orientation information.

Indicating to which perspective plane a surface is parallel is advantageous as it decreases the computational power necessary to detect the surfaces in the 2D image. For example, when a user indicates that a table surface is parallel to a floor surface, the detection algorithm can search more specifically and thus needs less computational power.

In an embodiment of the computer implemented method, the computer implemented method further comprises:
- receiving rotation information indicative of the rotation of the surface of the detectable objects with respect to the perspective planes in the 3D perspective; and
- defining the representation of the shape that matches the 3D perspective and satisfies the rotation of the detectable objects.

Indicating how a to-be-detected object is placed in a space (how the surface of the object is orientated with respect to the perspective planes in the 3D perspective), is advantageous as it decreases the computational power necessary to detect the surfaces in the 2D image. For example, when a user indicates that a table is placed parallel to the back wall, this will imply that there are less possible representations of the searched shape.

In an embodiment of the computer implemented method, the computer implemented method further comprises:
- using one detected representation of the shape to define an affine transformation; and
- detecting representations of other shapes of surfaces of objects using the affine transformation.

If the camera projection of the real world onto the captured 2D image, is considered as a separate process e.g. like a measurement step then a detected object in a scene can be considered as an affine transformation of a reference model (disregarding shearing). The above variables can be used to calculate a translation and a linear map or combine them in an augmented matrix. This can be very beneficial in case GPU's are available.

In an embodiment of the computer implemented method, the computer implemented method further comprises:
- detecting the representation of the shape using a Bayesian filtering technique.

Bayesian filters can be used to, for example, estimate "hidden" variables like e.g. the position or orientation of an object based on observable variables like e.g. edge positions etc. For different situations different filters are useful such as Kalman filters or particle filters. The advantages of these filters is that they can limit the computational resources required.

In an embodiment of the computer implemented method, the computer implemented method further comprises:
- detecting the representation of the shape using feature detection.

A feature, in computer vision and image processing, is a piece of information which is relevant for solving the computation task related to a certain application. Features can be specific structures in the image such as points, edges or objects. Detecting edges is a useful way to detect objects in an image.

In an embodiment of the computer implemented method, the computer implemented method further comprises:
- displaying the 2D image;
- displaying the detected representation of the shape; and
- displaying the 2D image comprising the luminaire and the lighting effect.

It is advantageous to display the 2D image, the detected transformed surface or the 2D image comprising the luminaire and the lighting effect as this gives a user insight into what is happening. First, displaying the 2D image is advantageous as the user can see if the image is the correct image is used for the analysis. Second, displaying the detected transformed surfaces is useful as the user can observe if the correct surfaces are detected and if the surfaces are detected correctly. Further, it is advantageous to display the 2D image comprising the luminaire and the lighting effect as the user can then see how a luminaire would look in a space. This can be helpful to a user to decide if he/she wants to buy the luminaire.

In an embodiment of the computer implemented method, he computer implemented method further comprises:
- displaying the detected representation of the shape; and
- receiving user input information comprising approval information and or adjustment information wherein the approval information is indicative of correctly detected transformed surfaces and wherein the adjustment information comprises instructions to change the position and or shape of the detected transformed surfaces.

It is useful if a user can provide feedback using a user interface. A user can observe quickly if a detected surface matches the actual surface in the image and can therefore provide feedback to the system. This helps improving the total accuracy of the computer implemented method.

In an embodiment of the computer implemented method, the computer implemented method further comprises:
- displaying the 2D image comprising the luminaire and the lighting effect.

It is advantageous to display the 2D image comprising the luminaire and the lighting effect as the user can then see how a luminaire would look in a space. This can be helpful to a user to decide if he/she wants to buy the luminaire.

According to a second aspect of the invention the object is achieved by a computer program product for a computing device, the computer program product comprising computer program code to perform the computer implemented method of when the computer program product is run on a processing unit of the computing device.

According to a third aspect of the invention the object is achieved by a computer readable storage medium for storing the computer readable computer program product.

### BRIEF DESCRIPTION OF THE DRAWINGS

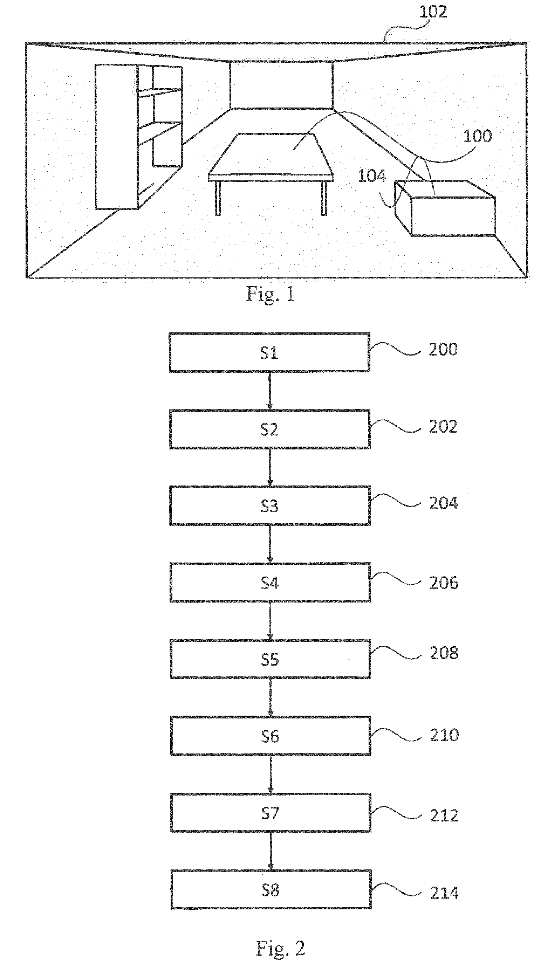

The above, as well as additional objects, features and advantages of the disclosed system, sensor apparatus, method and computer program product, will be better understood through the following illustrative and non-limiting detailed description of embodiments of devices and methods, with reference to the appended drawings Fig. 1 to 6, wherein
Fig. 1 shows a 2D image of a 3D scene,
Fig. 2 schematically shows a computer implemented method for determining a lighting effect of a luminaire when the luminaire would be placed in a space,
Fig. 3 illustrates a rectangle and three representations according to different perspectives parameters,
Fig. 4 illustrates a luminaire and a representation of the luminaire according to perspective parameters,
Fig. 5 illustrates the placement of a luminaire in the 2D image and illustrates the lighting effect of the luminaire,
Fig. 6A-C indicate the sets of lines used to determine the vanishing points.

All the figures are schematic, not necessarily to scale, and generally only show parts which are necessary in order to elucidate the invention, wherein other parts may be omitted or merely suggested.

### DESCRIPTION

In the field of computer vision, tracking shapes (e.g. 2D and 3D) including orientation estimation is already well established. Traditionally this is done by means advanced filter techniques such as Kalman and particle filters wherein particle filters have the advantage that they can also be used for detecting shapes.

Besides a full brute force search, shapes such as squares and discs could for example be detected by letting the particle filter randomly place many squares (particles) in 3D space that differ in position, orientation, and scale. Compare all particles with the actual situation (e.g. a photo of a square in a scene) and the particle with the smallest error is most likely the right detection/estimation.

Another approach to detect shapes is using the "Manhattan World Assumption" where 3D shapes consist mainly of lines which are either parallel or reciprocal. In the simplest form, there will be 3 vanishing points to which all lines converge in the perspective projection of a camera. Once these vanishing points are detected, one could theoretically more confidently detect shapes built with parallel and reciprocal lines. The constraints are that shape of the object has to comply with the "Manhattan World Assumption". New vanishing points have to be estimated when the object is not aligned with the "Manhattan World". These new vanishing point define a "local Manhattan World".

There exists many techniques to extract 3D information from a 2D image. If the scene in an image is a "Manhattan World" then in the simplest form one or more main surfaces can be detected. Object detection on those surfaces requires more analysis. The extra analysis is usually very computational intensive. If this extra effort is neglected, then chances are that those objects are not detected and assumed to be part of the surfaces and, therefore, considered completely flat. If the object is not part of the obtained 3D model then its behavior cannot be simulated and the result could be perceived as unnatural.

A more concrete example would be a table 100 in a simple room 102. If the table is not modelled, its texture in the photo will be considered part of the floor as e.g. a poster or a sticker. In that case, rendering that scene from a different perspective (another camera position) will give an unnatural result. Similarly, when putting a 3D model of an object on the floor in the 3D scene it could be considered as seemingly putting the object on the table from the 2D perspective. In that case, the proportion and perspective of the object may seem very unnatural.

As mentioned before, the extra analysis to detect objects in a scene can be very complex. Applying more constraints will limit the solution space and, therefore, limit the computation intensity as well. For example, the shape of an object could be restricted to primitive shapes or a compound of that. Some surfaces of the objects may comply with the "Manhattan World Assumption". All these restrictions can significantly reduce the complexity of detecting an object in a scene.

Fig. 1 illustrates how a table surface of a rectangular table would look like in a photo of a room. When the table needs to be detected in the image, constraints can be used to facilitate the detection. In the case of a rectangular table that is parallel to the surface of the floor, the only degrees of freedom are for example, the 2D position of the table on the floor, the rotation of the table, the size of the table, and the height of the table. These degrees of freedom now can be used for example to create a particle in the particle filter which can be compared with the measurements in the photo.

Similar sets can be defined for other primitives which are not restricted to 2D primitives. The detection is not limited by the horizon. Objects above the horizon can be detected in the same manner like e.g. looking under a book shelf. This invention doesn't have to be limited to detection.

The disclosed invention can be implemented using both "offline" and "real-time" processing. The generic pros and cons for these implementations apply here. Hybrid implementation are possible.

A very simple but impractical method to detect such a table surface, which is constraint by for example its shape, would be to test every possibility in a brute force manner. This is obviously very resource demanding. Another more practical approach could be by using a particle filtering technique. The framework of any variation could be used and the properties remain the same and should be chosen to match the problem to be solved. For example, a variation of a SIR particle filter could be used for offline processing and result in multiple object detections. The hidden state variables are in case of a square table, the surface position on the floor (x,y), the rotation (phi), the scale of the surface (s), and the height (h). Then, X = [x,y,phi,s,h]^{T}. The observable variables could be related to for example the distance between the transformed particle edges and actual edges in the photo. An appropriate measurement function can be used to assure that the particle with to smallest distance get the highest weight/probability. All kind of combinations of computer vision features can be used for the observation, e.g., as mentioned before generic edge detection, edge detection after color segmentation, moments of color blobs, corners etc.

By limiting the range of detectable object shapes (e.g. rectangle) and a surface is parallel to a known surface (e.g. a floor) one could very efficiently estimate position, pose, and therefore, surface distance like e.g. height.

The hidden state variables can differ between the chosen shapes:
- disc = [floor_pos_x, floor_pos_y, scale, height]^{T}
- square = [floor_pos_x, floor_pos_y, scale, height, rotation]^{T}
- rectangle = [floor_pos_x, floor_pos_y, scale_x, scale_y, height, rotation]^{T}

Any combination of variables that uniquely describes such objects in a chosen space can be used. Once a hidden state is detected/estimated then e.g. it can be used to create the visual cue. An extra constraint or emphasize on "preferred" rotation could be applied when a higher probability is assumed of an object being aligned with e.g. the "Manhattan world". E.g. a rectangular dinner table is most likely put parallel to the walls giving a higher probability of 0 and 90 degrees rotation with respect to the room. Preferably the complete object is visible in the image. Additionally, it is advantageous if no additional objects are placed on the surface of the to-be-detected object.

All of the above can be implemented to determine a lighting effect of a luminaire when the luminaire would be placed in a space that is captured in a 2D image. This can be implemented by a computer implemented method as shown in Fig. 2. Said method will in general be implemented as software on a computing device, wherein the processor of the computing device will carry out the computer implemented method.

In general, the 2D image will be a photograph. In order to determine the lighting effect of the luminaire that is digitally placed in the space that is captured in the image, a three dimensional representation of the space needs to be available. Such a representation is available when 3D perspective parameters are available. These parameters can be determined by a processor (200) and can be used to create the transformation matrix from a model that can be used to model the luminaire and or the space in the picture, to the world and to create the transformation matrix from the world to the camera projection. Note that these parameters can be used for different transformation matrices as well, or could be parameters that do not have to be used in matrix representation.

The user can use a user interface to insert the shape of a surface that is placed in the space and that the user wants to detect. This shape is used throughout the rest of the process to provide the constraint that enables a processor to find surfaces of objects in images using less computational power than when a brute force search would be done. Note that the insertion by the user result in the processor receiving object information comprising information on a shape of a surface of at least one object placed in the space (202).

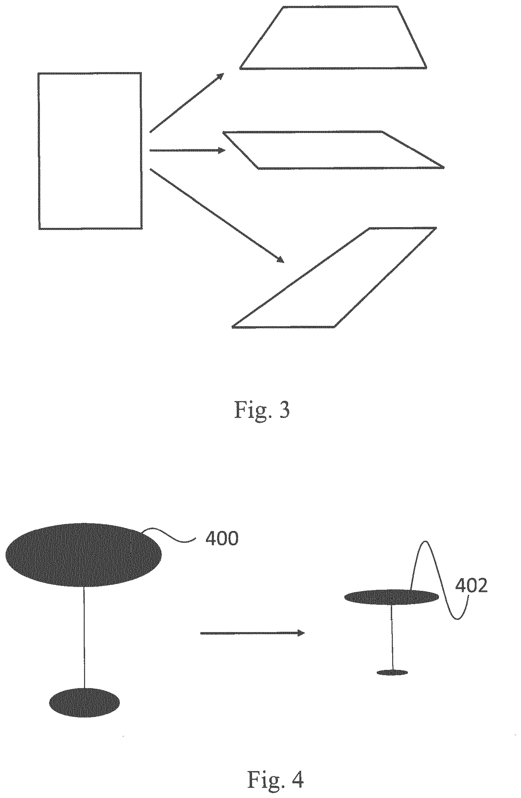

Now that the shape and the 3D perspective parameters are known, the processor can define a representation of the shape which matches the 3D perspective defined by 3D perspective parameters (204). A representation of the shape will comprise several different varieties as is shown in Fig 3. A rectangle will have different representations depending on the position in the image. Also, not shown in Fig. 3, a plurality of rotations is possible. When the variety of representations is available to the processor, the processor can detect the representation of the shape in the 2D image (206). In order to detect the representation of the shapes efficiently the processor can make use of Bayesian filtering techniques and feature detection.

Bayesian filters can be applied in Kalman filters, particle filters and grid based estimators. Bayesian filters estimate hidden variables such as but not limited to the position, scale, height and or orientation of objects based on observable variables. In linear quadratic situations, Kalman filters are advantageous while in non-linear settings, particle filters (sequential Monte-Carlo sampling) can be used. Advantages of these filters are that the processor can detect the representation of the shapes faster when computational resources are limited. In computer vision and image processing, a feature is a piece of information which is relevant for solving the computational task related to a certain application. Features may be specific structures in the image such as points, edges, blobs or objects. Features may also be the result of a general neighborhood operation or feature detection applied to the image. An example of feature detection is edge detection. Edge detection is related to the average distance between the edge of an estimate model (shape) and the closest detected edge.

Using the detected representation of the shape, surface position information indicate of the position of the surface of the object in the space can be determined (208). In order to do this, the 3D perspective parameters are used as well. For example, when the representation of a rectangle is found, the 3D perspective parameters can be used to determine the location of the surface of the object in a model of the space.

Now, a user can use a user interface to insert information on the position of the luminaire in the 3D space. The user can indicate for example, that the luminaire has to be placed in the middle of the ceiling, on a detected surface are at any other spot, such as on the ottoman (104) in the room of Fig, 4. Note that the luminaire can only be placed at spots that obey the laws of physics. A standing lamp for example can only be placed on the ground or on a surface. By indicating the position of a luminaire, the processor receives the information on a position of the luminaire in the space (210). When the position of the luminaire, the processor can define a representation of the luminaire that matches the 3D perspective at the received position (212), based on the 3D perspective parameters and the luminaire position and on the 2D image. This is illustrated in Fig. 4. The image of luminaire 400 can be transformed into a representation of the luminaire 402 which matches the 2D image at the spot of luminaire (104).

Using a 3D model of the luminaire, a transformation matrix can be used to make the 3D model of the luminaire fit into the 2D image. When the position and representation of the luminaire is known, the lighting effect of the luminaire can be determined based on the 3D perspective parameters, the surface position information, the luminaire position and on the 2D image (214).

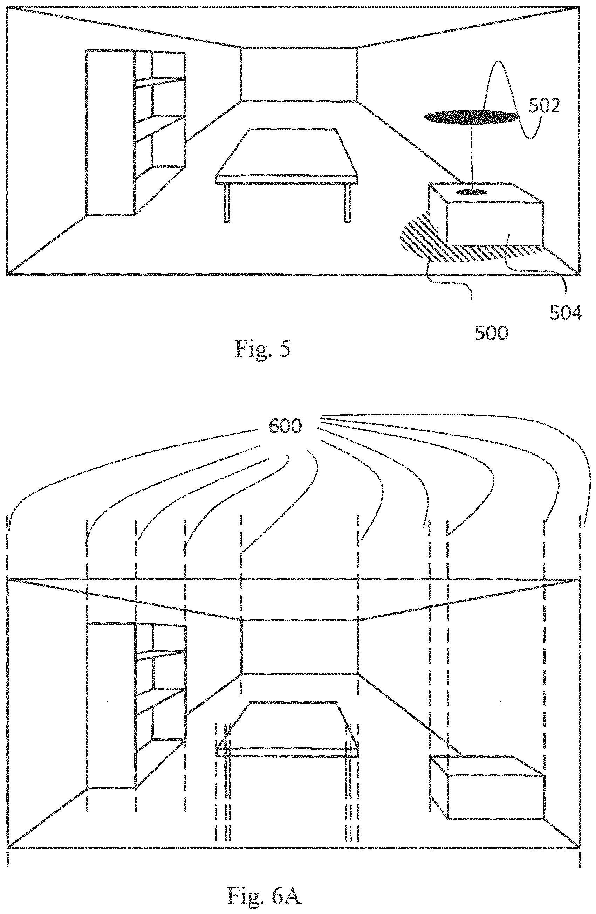

The lighting effect can be calculated by making use of the number of lumens a luminaire is planned to generate. In general this light will shine in a sphere and the intensity of the light will drop quadratically with distance. By making use of the detected surfaces of the objects and their position, and by making use of the shape and position of the luminaire, the processor can calculate in which direction the light will be blocked and how shadows are created. An example of such a shadow 500 is shown in Fig 5. The luminaire 502 is placed on the ottoman 504 which creates the shadow 500. The processor will also take into account the reflection of light beams as well as diffraction. Note that the processor can model the light emission precisely using a physical model but can also use rules of thumb to speed up the process. In order to use physical modelling, much information has to be present. The rules of thumb that can be used are the general techniques used in rendering engines. Surfaces can be define by using shaders and other model attributes. The user can put shader information in the system such that the lighting effect can be rendered more easily. The shader information can be inserted for one or more objects and for the floor, walls and ceiling. In general the shader information of the luminaire will be known to the system.

In order to provide the user with the result of the determination of the representation of the luminaire and the determined lighting effect, the processor can be coupled to a display to display the 2D image comprising the luminaire and the lighting effect. Rendering engines can be used to achieve this.

Note that the surface position information can be derived for a plurality of objects placed in the space. Such that for example a table, multiple bookshelves and a sofa can be detected.

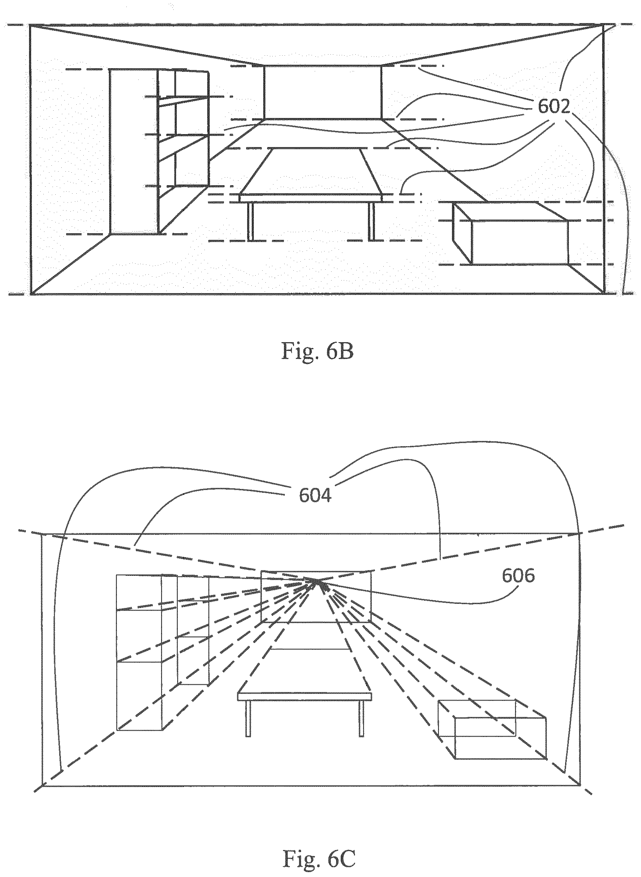

The 3D perspective parameters can comprise three vanishing points that represent three orthogonal perspective planes in the 3D perspective of the space as imaged in the 2D image. Note that, using the vanishing points, many planes can be created. The vanishing points at least enable the construction of three orthogonal perspective planes. The 3D perspective parameters additionally represent three orthogonal primary plane normals, wherein the primary plane normal represents both the normal pointing, for example, up from a floor surface and down from a ceiling surface. The processor can then find the three vanishing points using sets of lines extracted from the 2D image. This is shown in Fig. 6A,B and C The vanishing points extracted from the vertical 600 and horizontal 602 set of lines extracted from the image are placed at infinity while one vanishing point 606, extracted from the set of lines 604, is clear and is placed at the center of the image. Note that the position of the vanishing points depends on the position at which a picture is taken and will thus be different for every picture. Additionally, the cropping of a picture can have an effect on the positions of the vanishing points. It could be that a picture position is preferred or is suggested to a user. In Fig.6A, B and C the sets of lines used for the determination of the vanishing points are indicated by dotted lines.

In order to determine the vanishing points, a user can also indicate the planes in the image. A user can indicate in a 2D image, the area corresponding to the walls, floor and or ceiling. This will facilitate the detection of the vanishing points. Also, the user can indicate the lines where the walls and ceiling meet for example.

In order to be able to find surfaces of objects in the 2D image using even less computational power than previously described additional parameters can be inserted by a user. First, a user can insert orientation information indicative of the perspective plane to which the surface of the detectable object is parallel. If a user indicates the surface is parallel to the floor of the space in the image this limits the options for the processor to check. Additionally a user may indicate if surface is viewed from above or from below, meaning that surface can be both above and below the horizon. In even more advanced options the user can indicate the height of the surface. In the last case, the user should also indicate a real-life reference such as the size of the space in which the object is placed such the processor can calculate which regions in the image correspond to the height inserted by the user.

The user can also insert rotation information indicative of the rotation of the surface of the detectable objects with respect to the perspective planes in the general 3D perspective. For example, if a table is parallel or 30 degrees rotated with respect to the left wall. The processor can then define the representation of the shape that matches the 3D perspective and satisfies the rotation of the detectable objects (402). Hereby increasing the constraints on the detectable representation of the shape and thus allowing the processor to find it more easily.

When one representation of the shape is found, an affine transformation can be defined. Other representations of shapes of surfaces of objects can be found using the affine transformation. If the camera projection of the real world onto the captured 2D image, is considered as a separate process e.g. like a measurement step then a detected object in a scene can be considered as an affine transformation of a reference model (disregarding shearing). The above variables can be used to calculate a translation and a linear map or combine them in an augmented matrix. This can be very beneficial in case GPU's are available.

When the processor is connected to a display, it can display the 2D image, display the detected transformed surfaces and display the 2D image comprising the luminaire and the lighting effect. This can be used by a user to give input comprising approval information and or adjustment information wherein the approval information is indicative of correctly detected transformed surfaces and wherein the adjustment information comprises instructions to change the position and or shape of the detected transformed surfaces. The processor can use this information to improve its detection or for machine learning purposes.

The term "luminaire" is used herein to refer to an implementation or arrangement of one or more light emitters in a particular form factor, assembly, or package. The term "light emitter" is used herein to refer to an apparatus including one or more light sources of same or different types. A given light emitter may have any one of a variety of mounting arrangements for the light source(s), enclosure/housing arrangements and shapes, and/or electrical and mechanical connection configurations. Additionally, a given light emitter optionally may be associated with (e.g., include, be coupled to and/or packaged together with) various other components (e.g., control circuitry) relating to the operation of the light source(s).

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, and dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors. The computer program product may be distributed on such a storage medium, or may be offered for download through HTTP, FTP, e-mail or through a server connected to a network such as the Internet.

In various implementations, a processor may be associated with one or more storage media (generically referred to herein as "memory," e.g., volatile and non-volatile computer memory such as RAM, PROM, EPROM, and EEPROM, floppy disks, compact disks, optical disks, magnetic tape, USB sticks, SD cards and Solid State Drives etc.). In some implementations, the storage media may be encoded with one or more programs that, when executed on one or more processors, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

## Claims

1. A computer implemented method of determining a lighting effect of a luminaire(400) when the luminaire would be placed in a space, on the basis of a two dimensional (2D) image (102) of the space, the computer implemented method comprising:
- determine three dimensional (3D) perspective parameters based on the 2D image (200), wherein the 3D perspective parameters are indicative of a 3D perspective of the space as imaged in the 2D image;
- receiving object information comprising information on a shape of a surface of at least one object (100) placed in the space (202);
- defining a representation of the shape which matches the 3D perspective of the space based on the 3D perspective parameters (204);
- detecting the representation of the shape in the 2D image (206);
- deriving , from the detected representation of the shape and from the 3D perspective, surface position information indicative of the position of the surface of the at least one object in the space (208);
- receiving information on a position of the luminaire in the space (210);
- defining a representation of the luminaire (402) that matches the 3D perspective at the received position (212), based on the 3D perspective parameters and the luminaire position and on the 2D image; and
- determining the lighting effect (500) based on the 3D perspective parameters, the surface position information, the luminaire position and on the 2D image (214).

2. The computer implemented method of any one of claim 1, wherein surface position information is derived for a plurality of objects (100,104) placed in the space.

3. The computer implemented method of any one of the previous claims, wherein the 3D perspective parameters comprise three vanishing points that represent three orthogonal perspective planes in the 3D perspective of the space, further comprising:
- finding the three vanishing points using sets of lines (600, 602, 604) extracted from the 2D image.

4. The computer implemented method of any one of claims 1-2, wherein the 3D perspective parameters comprise three vanishing points that represent three orthogonal perspective planes in the 3D perspective of the space, further comprising:
receiving perspective information indicative of the orthogonal perspective planes; and
finding the three vanishing points based on the received perspective information.

5. The computer implemented method of any one of claims 3 and 4, further comprising:
- receiving surface orientation information indicative of the perspective plane in the 3D perspective to which the surface of the at least one object is parallel; and
- detecting the representation of the shape in the 2D image based on the surface orientation information.

6. The computer implemented method of any one of claims 3-5, further comprising:
- receiving rotation information indicative of the rotation of the surface of the at least one object with respect to the perspective planes in the 3D perspective; and
- defining the representation of the shape that matches the 3D perspective and satisfies the rotation of the detectable objects.

7. The computer implemented method of any one of claims 1-6 further comprising:
- using one detected representation of a shape of a surface of at least one object to define an affine transformation; and
- detecting representations of other shapes of surfaces of objects using the affine transformation.

8. The computer implemented method of anyone of claims 1-7 further comprising:
- detecting the representation of the shape using a Bayesian filtering technique.

9. The computer implemented method of anyone of claims 1-8 comprising:
- detecting the representation of the shape using feature detection.

10. The computer implemented method of anyone of claims 1-10 further comprising:
- displaying the 2D image;
- displaying the detected representation of the shape; and
- displaying the 2D image comprising the luminaire and the lighting effect.

11. The computer implemented method of claim 10 further comprising:
displaying the detected representation of the shape; and
- receiving user input information comprising approval information and or adjustment information wherein the approval information is indicative of correctly detected transformed surfaces and wherein the adjustment information comprises instructions to change the position and or shape of the detected transformed surfaces.

12. The computer implemented method of anyone of claims 1-10 further comprising:
displaying the 2D image comprising the luminaire (502) and the lighting effect (500).

13. A computer program product for a computing device, the computer program product comprising computer program code to perform the computer implemented method of any one of the claims 1 to 12 when the computer program product is run on a processing unit of the computing device.

14. A computer readable storage medium for storing the computer readable computer program product of claim 13.

## Patentansprüche

1. Computerimplementiertes Verfahren zur Bestimmung eines Beleuchtungseffekts einer Leuchte (400), wenn die Leuchte in einem Raum auf der Basis eines zweidimensionalen (2D) Bildes (102) des Raums platziert würde, wobei das computerimplementierte Verfahren umfasst:
- Bestimmen von dreidimensionalen (3D) perspektivischen Parametern auf Basis des 2D-Bildes (200), wobei die perspektivischen 3D-Parameter auf eine perspektivische 3D-Ansicht des Raums wie im dem 2D-Bild abgebildet schließen lassen;
- Empfangen von Objektinformationen, welche Informationen über eine Form einer Oberfläche von zumindest einem in dem Raum (202) platzierten Objekt (100) umfassen;
- Definieren einer Darstellung der Form, welche mit der perspektivische 3D-Ansicht des Raums auf Basis der perspektivischen 3D-Parameter (204) übereinstimmt;
- Erkennen der Darstellung der Form in dem 2D-Bild (206);
- Ableiten von der erkannten Darstellung der Form und von der perspektivische 3D-Ansicht von Informationen hinsichtlich der Oberflächenposition, welche auf die Position der Oberfläche von dem zumindest einem Objekt in dem Raum (208) schließen lassen;
- Empfangen von Informationen über eine Position der Leuchte in dem Raum (210);
- Definieren einer Darstellung der Leuchte (402), welche mit der perspektivischen 3D-Ansicht an der empfangenen Position (212) übereinstimmt, auf Basis der perspektivischen 3D-Parameter und der Leuchtenposition und des 2D-Bildes; und
- Bestimmen des Beleuchtungseffekts (500) auf Basis der perspektivischen 3D-Parameter, der Informationen hinsichtlich der Oberflächenposition, der Leuchtenposition und des 2D-Bildes (214).

2. Computerimplementiertes Verfahren nach einem von Anspruch 1, wobei Informationen hinsichtlich der Oberflächenposition von einer Vielzahl von in dem Raum positionierten Objekten (100, 104) abgeleitet werden.

3. Computerimplementiertes Verfahren nach einem der vorstehenden Ansprüche, wobei die perspektivischen 3D-Parameter drei Fluchtpunkte umfassen, welche drei rechtwinkelige perspektivische Ebenen in der perspektivische 3D-Ansicht des Raums repräsentieren, weiter umfassend:
- Finden der drei Fluchtpunkte unter Verwendung von Liniensätzen (600, 602, 604), welche von dem 2D-Bild extrahiert wurden.

4. Computerimplementiertes Verfahren nach einem der Ansprüche 1-2, wobei die perspektivischen 3D-Parameter drei Fluchtpunkte umfassen, welche drei rechtwinkelige perspektivische Ebenen in der perspektivische 3D-Ansicht des Raums repräsentieren, weiter umfassend:
Empfangen von perspektivischen Informationen, welche auf die rechtwinkeligen perspektivischen Ebenen schließen lassen; und
Finden der drei Fluchtpunkte auf Basis der empfangenen perspektivischen Informationen.

5. Computerimplementiertes Verfahren nach einem der Ansprüche 3 und 4, weiter umfassend:
- Empfangen von Informationen hinsichtlich der Ausrichtung der Oberfläche, welche auf die perspektivische Ebene in der perspektivischen 3D-Ansicht schließen lassen, zu welcher die Oberfläche des zumindest einen Objekts parallel ist; und
- Erkennen der Darstellung der Form in dem 2D-Bild auf Basis der Informationen hinsichtlich der Ausrichtung der Oberfläche.

6. Computerimplementiertes Verfahren nach einem der Ansprüche 3-5, weiter umfassend:
- Empfangen von Informationen hinsichtlich der Rotation, welche auf die Rotation der Oberfläche des zumindest einen Objekts in Bezug auf die perspektivischen Ebenen in der perspektivischen 3D-Ansicht schließen lassen; und
- Definieren der Darstellung der Form, welche mit der perspektivischen 3D-Ansicht übereinstimmt und der Rotation erkennbaren Objekte entspricht.

7. Computerimplementiertes Verfahren nach einem der Ansprüche 1-6, weiter umfassend:
- Verwenden einer erkannten Darstellung einer Form einer Oberfläche von zumindest einem Objekt, um eine affine Transformation zu definieren; und
- Erkennen von Darstellungen von anderen Formen von Oberflächen von Objekten unter Verwendung der affinen Transformation.

8. Computerimplementiertes Verfahren nach einem der Ansprüche 1-7, weiter umfassend:
- Erkennen der Darstellung der Form unter Verwendung einer Bayesischen Filtertechnologie.

9. Computerimplementiertes Verfahren nach einem der Ansprüche 1-8, umfassend:
- Erkennen der Darstellung der Form unter Verwendung von Merkmalerkennung.

10. Computerimplementiertes Verfahren nach einem der Ansprüche 1-10, weiter umfassend:
- Anzeigen des 2D-Bildes;
- Anzeigen der erkannten Darstellung der Form; und
- Anzeigen des 2D-Bildes, welches die Leuchte und den Beleuchtungseffekt umfasst.

11. Computerimplementiertes Verfahren nach Anspruch 10, weiter umfassend:
Anzeigen der erkannten Darstellung der Form; und
- Empfangen von Benutzereingabeinformationen, umfassend Genehmigungsinformationen und oder Anpassungsinformationen, wobei die Genehmigungsinformationen auf korrekt erkannte transformierte Oberflächen schließen lassen und wobei die Anpassungsinformationen Anweisungen zum Ändern der Position und oder Form der erkannten transformierten Oberflächen umfassen.

12. Computerimplementiertes Verfahren nach einem der Ansprüche 1-10, weiter umfassend:
Anzeigen des 2D-Bildes, welches die Leuchte (502) und den Beleuchtungseffekt (500) umfasst.

13. Computerprogrammprodukt für eine datenverarbeitende Vorrichtung, wobei das Computerprogrammprodukt Computerprogrammcode zum Ausführen des computerimplementierten Verfahrens nach einem der Ansprüche 1 bis 12 umfasst, wenn der Computerprogrammcode auf einer verarbeitenden Einheit der datenverarbeitenden Vorrichtung ausgeführt wird.

14. Computerlesbares Speichermedium zum Speichern des computerlesbaren Computerprogrammprodukts nach Anspruch 13.

## Revendications

1. Procédé mis en oeuvre par ordinateur de détermination d'un effet d'éclairage d'un luminaire (400) quand le luminaire serait placé dans un espace, sur la base d'une image (102) en deux dimensions (2D) de l'espace, le procédé mis en oeuvre par ordinateur comprenant :
- la détermination de paramètres de perspective en trois dimensions (3D) sur la base de l'image en 2D (200), dans lequel les paramètres de perspective en 3D sont indicatifs d'une perspective en 3D de l'espace tel qu'imagé dans l'image en 2D ;
- la réception d'informations d'objet comprenant des informations concernant une forme d'une surface d'au moins un objet (100) placé dans l'espace (202) ;
- la définition d'une représentation de la forme qui correspond à la perspective en 3D de l'espace sur la base des paramètres de perspective en 3D (204) ;
- la détection de la représentation de la forme dans l'image en 2D (206) ;
- la dérivation, de la représentation détectée de la forme et de la perspective en 3D, d'informations de position de surface indicatives de la position de la surface de l'au moins un objet dans l'espace (208) ;
- la réception d'informations concernant une position du luminaire dans l'espace (210) ;
- la définition d'une représentation du luminaire (402) qui correspond à la perspective en 3D dans la position reçue (212), sur la base des paramètres de perspective en 3D et de la position de luminaire et de l'image en 2D ; et
- la détermination de l'effet d'éclairage (500) sur la base des paramètres de perspective en 3D, des informations de position de surface, de la position de luminaire et de l'image en 2D (214).

2. Procédé mis en oeuvre par ordinateur selon la revendication 1, dans lequel des informations de position de surface sont dérivées pour une pluralité d'objets (100, 104) placés dans l'espace.

3. Procédé mis en oeuvre par ordinateur selon l'une quelconque des revendications précédentes, dans lequel les paramètres de perspective en 3D comprennent trois points de fuite qui représentent trois plans en perspective orthogonale dans la perspective en 3D de l'espace, comprenant en outre :
- la découverte des trois points de fuite à l'aide d'ensembles de lignes (600, 602, 604) extraits de l'image en 2D.

4. Procédé mis en oeuvre par ordinateur selon l'une quelconque des revendications 1-2, dans lequel les paramètres de perspective en 3D comprennent trois points de fuite qui représentent trois plans en perspective orthogonale dans la perspective en 3D de l'espace, comprenant en outre :
la réception d'informations de perspective indicatives des plans en perspective orthogonale ; et
la découverte des trois points de fuite sur la base des informations de perspective reçues.

5. Procédé mis en oeuvre par ordinateur selon l'une quelconque des revendications 3 et 4, comprenant en outre :
- la réception d'informations d'orientation de surface indicatives du plan en perspective dans la perspective en 3D auquel la surface de l'au moins un objet est parallèle ; et
- la détection de la représentation de la forme dans l'image en 2D sur la base des informations d'orientation de surface.

6. Procédé mis en oeuvre par ordinateur selon l'une quelconque des revendications 3-5, comprenant en outre :
- la réception d'informations de rotation indicatives de la rotation de la surface de l'au moins un objet par rapport aux plans en perspective dans la perspective en 3D ; et
- la définition de la représentation de la forme qui correspond à la perspective en 3D et satisfait la rotation des objets détectables.

7. Procédé mis en oeuvre par ordinateur selon l'une quelconque des revendications 1-6, comprenant en outre :
- l'utilisation d'une représentation détectée d'une forme d'une surface d'au moins un objet pour définir une transformation affine ; et
- la détection de représentations d'autres formes de surfaces d'objets à l'aide de la transformation affine.

8. Procédé mis en oeuvre par ordinateur selon l'une quelconque des revendications 1-7, comprenant en outre :
- la détection de la représentation de la forme à l'aide d'une technique de filtrage Bayésien.

9. Procédé mis en oeuvre par ordinateur selon l'une quelconque des revendications 1-8 comprenant :
- la détection de la représentation de la forme à l'aide d'une détection d'attributs.

10. Procédé mis en oeuvre par ordinateur selon l'une quelconque des revendications 1-10 comprenant en outre :
l'affichage de l'image en 2D ;
- l'affichage de la représentation détectée de la forme ; et
- l'affichage de l'image en 2D comprenant le luminaire et l'effet d'éclairage.

11. Procédé mis en oeuvre par ordinateur selon la revendication 10 comprenant en outre :
- l'affichage de la représentation détectée de la forme ; et
- la réception d'informations d'entrée utilisateur comprenant des informations d'approbation et/ou des informations d'ajustement dans lequel les informations d'approbation sont indicatives de surfaces transformées correctement détectées et dans lequel les informations d'ajustement comprennent des instructions pour changer la position et/ou la forme des surfaces transformées détectées.

12. Procédé mis en oeuvre par ordinateur selon l'une quelconque des revendications 1-10 comprenant en outre :
l'affichage de l'image en 2D comprenant le luminaire (502) et l'effet d'éclairage (500).

13. Produit-programme d'ordinateur pour un dispositif informatique, le produit-programme d'ordinateur comprenant un code de programme d'ordinateur pour effectuer le procédé mis en oeuvre par ordinateur selon l'une quelconque des revendications 1 à 12 quand le produit-programme d'ordinateur est exécuté sur une unité de traitement du dispositif informatique.

14. Support de stockage lisible par ordinateur pour stocker le produit-programme d'ordinateur lisible par ordinateur selon la revendication 13.
